# EUROPÄISCHE PATENTSCHRIFT

(11) **EP 1 752 231 B1**
(45) Veröffentlichungstag und Bekanntmachung des Hinweises auf die Patenterteilung: **23.09.2009**
(21) Anmeldenummer: 06010599.6
(22) Anmeldetag: 23.05.2006
(51) Int. Cl.: B21B 38/06, B21B 38/00

(54) **Messrolle zur Messung der Bandzugspannung und/oder der Bandtemperatur über die Bandbreite für eine Bandplanheitsregelung beim Walzen von Bandmaterial**
Measuring roller for measuring the tension and/ or the temperature of a band across the band width for a flatness control when rolling band material
Rouleau de mesure pour mesurer la tension et/ ou la température d' une bande dans la direction de la largeur de la bande pour un réglage de planéité lors du laminage d'un matériau en forme de bande

(30) Priorität: 09.08.2005 DE 202005012465 U
(43) Veröffentlichungstag der Anmeldung: 14.02.2007
(73) Patentinhaber: ACHENBACH BUSCHHÜTTEN GmbH, 57223 Kreuztal (DE)
(72) Erfinder: Barten, Axel, Dipl.-Ing., 57078 Siegen (DE); Schäfer, Axel, Dipl.-Kfm., 57399 Kirchhundem (DE); Stahl, Werner, Ing., 57223 Kreuztal (DE)
(74) Vertreter: advotec.

(56) Entgegenhaltungen:
- EP-A- 1 557 638
- EP-A2- 1 048 370
- DE-A1- 19 838 457
- DE-C1- 10 207 501
- US-A- 4 428 244
- US-A1- 2002 092 365

## Beschreibung

Die Erfindung betrifft eine Messrolle zur Messung der Bandzugspannung und/oder der Bandtemperatur über die Bandbreite für eine Bandplanheitsregelung beim Walzen von Bandmaterial, mit einem Grundkörper, einem auf den Grundkörper aufgeschrumpften Mantelrohr sowie in Ausnehmungen des Grundkörpers der drehangetriebenen Messrolle integrierten Sensoren zur Messung der auf das Mantelrohr wirkenden radialen Kraftkomponenten der Bandzugspannungen und/oder der Temperatur des Walzbandes bzw. des Mantelrohres (DE 198 38 457 A1).

Zusätzlich zu den Anforderungen an die Maß- und Formgenauigkeit von gewalztem Bandmaterial ist der Oberflächenkontakt der Messrolle zur Messung der Bandzugspannung und/oder der Bandtemperatur im Hinblick auf die Gewinnung genauer Messwerte von Bedeutung.

Bei einer aus der DE 92 18 981 U1 bekannten, als Vollrolle ausgebildeten Messrolle zur Ermittlung der Spannungsverteilung über die Bandbreite beim Walzen dünner Bänder sind die einzelnen Sensoren in einem auf der Zylindermantelfläche der Messrolle verteilten Muster in Radialbohrungen eingebracht. Zur Befestigung der Sensoren in den Radialbohrungen der Messrolle und zum Schließen der Bohrungen sind verschraubte Stopfen vorgesehen. Eine besondere Schwierigkeit bei dieser bekannten Messrolle ist das Entkoppeln der Sensorstopfen vom Messrollenkörper, insbesondere bei belastungs- und durchbiegungsbedingten Kraftnebenschlüssen, bei einem gleichzeitigen Erfordernis eines abgedichteten Ringspaltes zwischen Stopfen und Messrollenkörper. Bei einem Ringspalt von 0,01 bis 0,05mm entstehen keine Beschädigungen oder Markierungen auf der Oberfläche des über die Messrolle laufenden Walzbandes.

Bei einer aus der DE 196 16 980 A1 bekannten Messrolle wird zur Vereinfachung des Sensoreinbaus und zur Vermeidung einer Verschmutzung des Ringspaltes zwischen der Abdeckung der in Radialbohrungen der Messrolle eingesetzten Sensoren und der Bohrung der Ringspalt mit einer Kunststoffschicht abgedichtet.

Aus der EP 1 432 536 B1 sind verschiedene Ausführungen der Sensorabdeckung und der Sensorbefestigung bekannt, die dazu dienen, die Aufnahmebohrungen für die Sensoren in der Messrolle ohne einen Ringspalt abzudichten.

Die sich durch die nicht geschlossene Rollenoberfläche ergebenden Nachteile wie ein Kraftnebenschluß der Sensorstopfen in den radialen Aufnahmebohrungen des Rollenkörpers und das Eindringen von Verschmutzungen in die Ringspalte werden bei der in der DE 102 07 501 C1 beschriebenen Messrolle dadurch beseitigt, dass eine Vollrolle mit zur Aufnahme der Drucksensoren dienenden achsparallelen Bohrungen bzw. Kanälen verwendet wird, die in einem Abstand von 1 bis 30mm, vorzugsweise 5 bis 10mm unter der Oberfläche der Vollrolle verlaufen. Diese Messrollenkonstruktion hat den Nachteil, dass die Herstellung der Bohrungen bzw. Kanäle im Rollenkörper zur Aufnahme der Sensoren eine höchste Präzision im Hinblick auf die Einhaltung der geometrischen Lage der Kanäle im Rollenkörper erfordert und bei langen Vollrollen mit einer Länge von beispielsweise über 2000mm nicht wirtschaftlich verwirklicht werden kann. Ferner ist die Nachbearbeitung der Vollrolle durch den geringen Abstand der Sensoren von der Oberfläche der Rolle auf wenige Millimeter begrenzt.

Die aus der DE 198 38 457 A1 bekannte gattungsgemäße Messrolle mit einem auf deren Grundkörper aufgeschrumpften Mantelrohr hat den Nachteil, dass die in Radialbohrungen des Grundkörpers eingesetzten Sensoren beim Aufschrumpfen des zuvor erwärmten Mantelrohres durch die Wärme des Rohres beschädigt werden.

Der Erfindung liegt die Aufgabe zugrunde, die gattungsgemäße Messrolle im Hinblick auf eine kostengünstige Herstellung weiterzuentwickeln, die eine Beschädigung der Sensoren durch die Aufschrumpftemperatur des Mantelrohres ausschließt.

Diese Aufgabe wird erfindungsgemäß gelöst durch eine Messrolle mit den Merkmalen des Patentanspruchs 1.

Die Unteransprüche beinhalten vorteilhafte und zweckmäßige Weiterbildungen der Messrolle. ,

Die Erfindung ist nachstehend anhand von Zeichnungsfiguren erläutert, die folgendes darstellen:
- Fig. 1: den schematischen Aufbau eines Quartowalzwerks,
- Fig. 2: eine perspektivische Darstellung einer Messrolle,
- Fig. 3: eine Längsschnittdarstellung der Messrolle nach Fig. 2,
- Fig. 4: eine ausschnittsweise, vergrößerte, perspektivische Darstellung eines in den Grundkörper der Messrolle eingearbeiteten Kanals für den Einbau von Sensoren, die
- Fign. 5a-5c: vergrößerte Querschnittsdarstellungen verschiedener Ausführungsformen der Kanäle zur Aufnahme der Sensoren und
- Fig. 6: eine ausschnittsweise vergrößerte Querschnittsdarstellung der Messrolle mit einer Freischnittnut im Grundkörper der Rolle zum Entfernen des Mantelrohres.

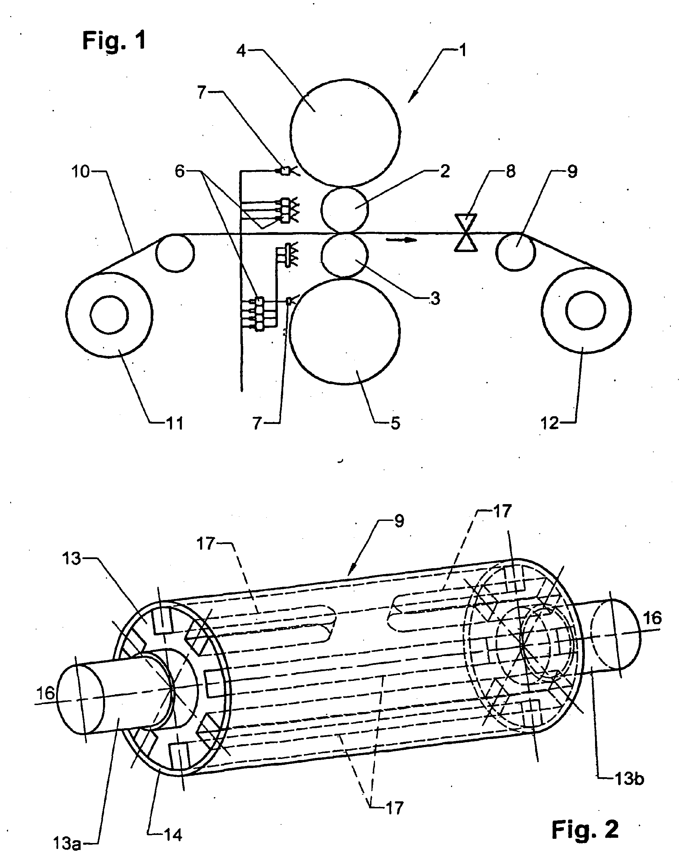

Fig. 1 zeigt den schematischen Aufbau eines Quartowalzwerkes mit einem Vierwalzengerüst 1, in dem zwei Arbeitswalzen 2, 3 und zwei Stützwalzen 4, 5 eingebaut sind, Kühlvorrichtungen 6, 7 im Bandeinlauf für die Arbeitswalzen 2, 3 und die Stützwalzen 4, 5, einem Banddickenmessgerät 8, z.B. einem Beta- oder Röntgenstrahler, und einer Messrolle 9 im Bandauslauf zur Messung der Bandzugspannung und der Bandtemperatur über die Breite des Walzbandes 10 für eine Bandplanheitsregelung durch das zonenweise Aufsprühen von Kühlmittel mittels der Kühlvorrichtungen 6, 7 auf die Walzenballen der Arbeitswalzen 2, 3 und der Stützwalzen 4, 5, einem Abwickelhaspel 11 sowie einem Aufwickelhaspel 12 für das Walzband 10.

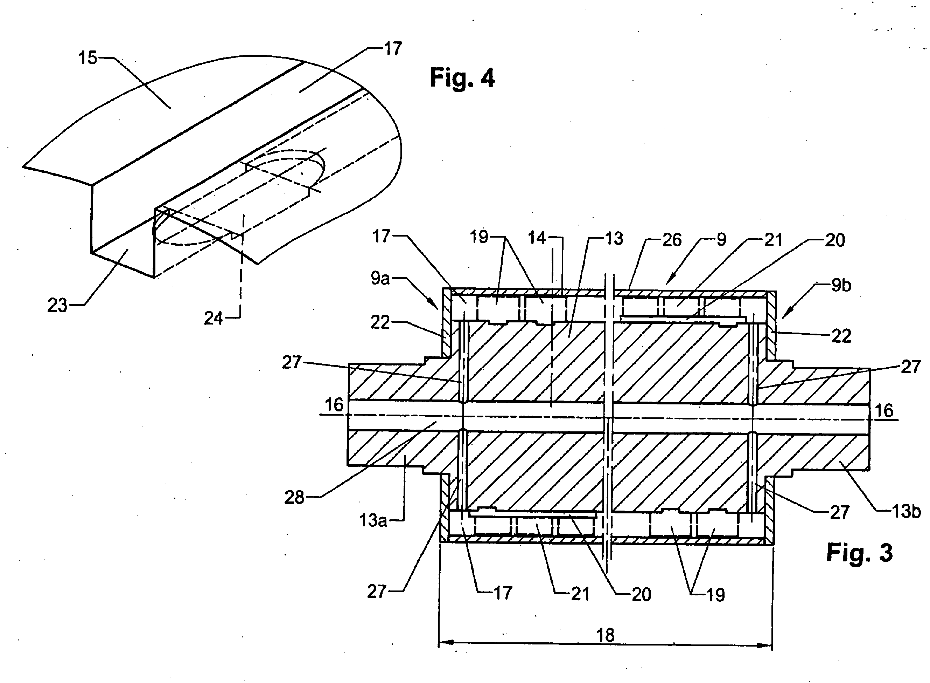

Die erfindungsgemäße drehangetriebene Messrolle 9 nach den Figuren 2 und 3 zur Messung der Bandzugspannung und/oder der Bandtemperatur über die Bandbreite für eine Bandplanheitsregelung beim Walzen von Walzband 10 wird durch einen Grundkörper 13 mit Lagerzapfen 13a, 13b sowie ein auf diesen aufgeschrumpftes Mantelrohr 14 gebildet.

In den Außenmantel 15 des Grundkörpers 13 der Messrolle 9 sind parallel zur Rollenachse 16-16 verlaufende Nuten bzw. Kanäle 17 eingefräst, die sich über die gesamte Rollenlänge 18 erstrecken oder unterbrochen sind.

Die Kanäle 17 beliebigen Querschnitts sind über große Rollenlängen 18 wirtschaftlich, mit hoher Präzision und unter Einhaltung gleichbleibender, hoher Oberflächengüten zum Beispiel durch Fräsen und Schleifen herstellbar.

Von den beiden Stirnseiten 9a, 9b der Messrolle 9 werden in die Kanäle 17 des von dem Mantelrohr 14 umschlossenen Grundkörpers 13 Sensoren 19 zur Messung der auf das Mantelrohr 14 wirkenden radialen Kraftkomponenten der Bandzugspannungen und /oder der Temperatur des Walzbandes 10 bzw. des Mantelrohres 14 eingesetzt.

Die Sensoren 19 werden einzeln oder als auf einer Grundplatte 20 befestigte Einheiten 21 in die Kanäle 17 eingebaut, die nach dem Einbau der Sensoren 19 durch ringförmige Deckel 22 verschlossen werden, die an dem Grundkörper 13 der Messrolle 9 festgeschraubt werden.

In den Grund 23 der Kanäle 17 des Grundkörpers 13 sind Vertiefungen 24 zur Arretierung der einzelnen Sensoren 19 oder der Sensoreinheiten 21 eingearbeitet, die mit einem entsprechendem Klemmelement ausgestattet sind (Fig. 4).

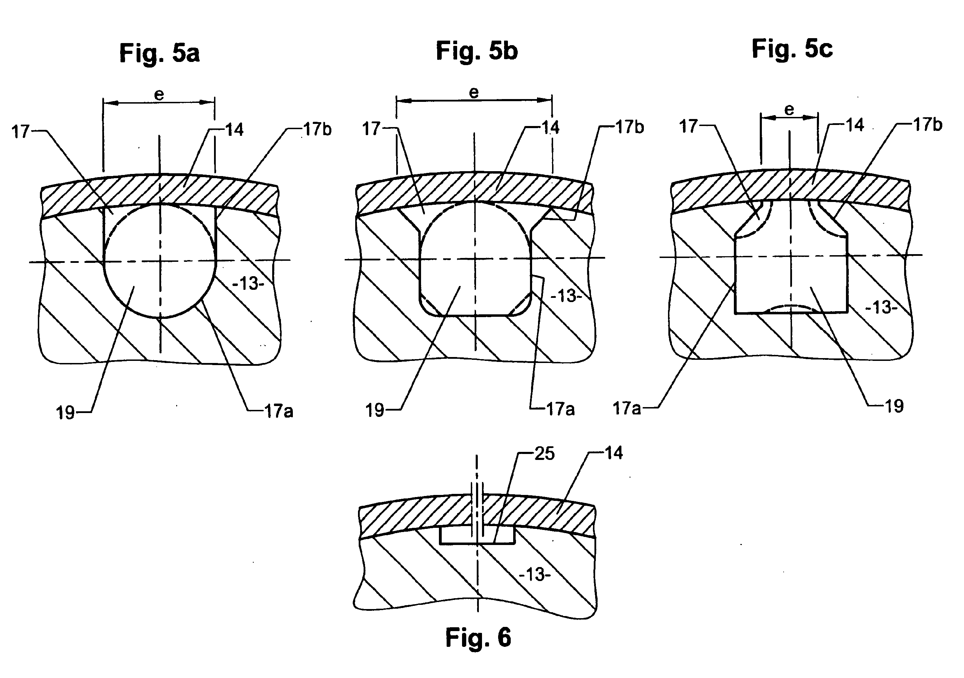

Entsprechend den Darstellungen der Figuren 5a bis 5c ist die Form des unteren Abschnitts 17a der Kanäle 17 des Grundkörpers 13 der Form der Sensoren 19 angepasst und die Form des oberen Abschnitts 17b der Kanäle 17 ist in Abhängigkeit von der Übertragungsfunktion des Mantelrohres 14 gestaltet.

In der Praxis wird die Übertragungsfunktion des Mantelrohres der Messrolle durch Eichen mit einer Normalkraft ermittelt und durch einen Kalibrierfaktor auf das erhaltene Sensorsignal berücksichtigt.

Die Figuren 5a bis 5c zeigen jeweils die Formgebung des oberen Abschnitts 17b der Kanäle 17 für eine Standardübertragungsfunktion, eine verstärkte Übertragungsfunktion und eine gedämpfte Übertragungsfunktion des Mantelrohres 14 der Messrolle 9.

Nach Erreichen der Abschliffgrenze des Mantelrohres 14 ist vorgesehen, das Mantelrohr nach Ausbau der Sensoren 19 bzw. Sensoreinheiten 21 aus dem Grundkörper 13 der Messrolle 9 in Achsrichtung zu durchtrennen und den Grundkörper 13 mit einem neuen Mantelrohr 14 auszustatten. Zu diesem Zweck ist der Grundkörper 13 mit mindestens einer Freischnittnut 25 versehen (Fig. 6).

Das Mantelrohr 14 der Messrolle 9 weist eine verschleißmindernde Beschichtung 26 auf.

Die Kanäle 17 im Grundkörper 13 der Messrolle 9 können als Kühlkanäle zur Aufnahme eines Kühlmittels ausgebildet sein.

Von den achsparallelen Kanälen 17 im Grundkörper 13 der Messrolle 9 zur Aufnahme der Sensoren 19 bzw. Sensoreinheiten 21 zweigen nahe an ihrer Stirnseite Querkanäle 27 ab, die zu einem zentralen Kabelkanal 28 für die nicht dargestellten Anschlusskabel der Sensoren 19 führen.

Die Messrolle 9 kann mit einer nicht dargestellten Einrichtung zur Messung der belastungsabhängigen Verformung des Grundkörpers 13 in seiner Längsrichtung für die Korrektur der durch die Verformung veränderten Messwerte ausgestattet werden.

## Patentansprüche

1. Messrolle zur Messung der Bandzugspannung und/oder der Bandtemperatur über die Bandbreite für eine Bandplanheitsregelung beim Walzen von Bandmaterial, mit einem Grundkörper, einem auf den Grundkörper aufgeschrumpften Mantelrohr sowie in Ausnehmungen des Grundkörpers der drehangetriebenen Messrolle integrierten Sensoren zur Messung der auf das Mantelrohr wirkenden radialen Kraftkomponenten der Bandzugspannungen und/oder der Temperatur des Walzbandes bzw. des Mantelrohres, **dadurch gekennzeichnet, dass** in den Außenmantel (15) des Grundkörpers (13) der Messrolle (9) parallel zur Rollenachse (16-16) verlaufende Kanäle (17) eingearbeitet sind, die sich über die gesamte Rollenlänge (18) erstrecken oder unterbrochen sind, das Mantelrohr (14) auf den fertig bearbeiteten Grundkörper (13) aufgeschrumpft ist und dass von den beiden Stirnseiten (9a, 9b) der Messrolle (9) Sensoren (19) in die Kanäle (17) des von dem Mantelrohr (14) umschlossenen Grundkörpers (13) eingesetzt sind.

2. Messrolle nach Anspruch 1, **gekennzeichnet durch** einzeln in die Kanäle (17) des Grundkörpers (13) eingesetzte Sensoren (19).

3. Messrolle nach Anspruch 1, **gekennzeichnet durch** in die Kanäle (17) des Grundkörpers (13) eingesetzte Sensoreinheiten (21).

4. Messrolle nach einem der Ansprüche 1 bis 3, **dadurch gekennzeichnet, dass** die Form des unteren Abschnitts (17a) der Kanäle (17) des Grundkörpers (13) der Form der Sensoren (19) angepaßt ist.

5. Messrolle nach einem der Ansprüche 1 bis 4, **dadurch gekennzeichnet, dass** die Form des oberen Abschnitts (17b) der Kanäle (17) des Grundkörpers (13) in Abhängigkeit von der Übertragungsfunktion des Mantelrohres (14) gestaltet ist, wobei die Übertragungsfunktion des Mantelrohres der Messrolle durch Eichen mit einer Normalkraft ermittelt und durch einen Kalibrierfaktor auf das erhaltene Sensorsignal berücksichtigt wird.

6. Messrolle nach einem der Ansprüche 1 bis 5, **gekennzeichnet durch** in den Grund (23) der Kanäle (17) des Grundkörpers (13) eingearbeitete Vertiefungen (24) zur Arretierung der einzelnen Sensoren (19) oder der Sensoreinheiten (21).

7. Messrolle nach einem der Ansprüche 1 bis 6, **dadurch gekennzeichnet, dass** der Grundkörper (13) der Messrolle (9) mit mindestens einer Freischnittnut (25) zum Entfernen des Mantelrohres (14) versehen ist.

8. Messrolle nach einem der Ansprüche 1 bis 7, **dadurch gekennzeichnet, dass** das Mantelrohr (14) der Messrolle (9) eine verschleißmindernde Beschichtung (26) aufweist.

9. Messrolle nach einem der Ansprüche 1 bis 8, **dadurch gekennzeichnet, dass** die Kanäle (17) im Grundkörper (13) der Messrolle (9) als Kühlkanäle zur Aufnahme eines Kühlmittels ausgebildet sind.

10. Messrolle nach einem der Ansprüche 1 bis 9, **dadurch gekennzeichnet, dass** die Messrolle (9) mit einer Einrichtung zur Messung ihrer belastungsabhängigen Verformung ausgestattet ist.

## Claims

1. Measuring roller for measuring the strip tensile stress and/or the strip temperature across the strip width for strip surface flatness control when rolling strip material, having a basic body, a jacket tube shrunk onto the basic body and also sensors integrated into recesses of the basic body of the rotationally-driven measuring roller for measurement of the radial force components, acting upon the jacket tube, of the strip tensile stresses and/or of the temperature of the rolled strip or of the jacket tube, **characterised in that,** in the outer jacket (15) of the basic body (13) of the measuring roller (9), channels (17) which extend parallel to the axis of the roller (16 - 16) are incorporated and extend across the entire roller length (18) or are interrupted, the jacket tube (14) is shrunk onto the finished machined basic body (13) and **in that** sensors (19) are inserted from both end-sides (9a, 9b) of the measuring roller (9) into the channels (17) of the basic body (13) which is enclosed by the jacket tube (14).

2. Measuring roller according to claim 1, **characterised by** sensors (19) which are inserted individually into the channels (17) of the basic body (13).

3. Measuring roller according to claim 1, **characterised by** sensor units (21) which are inserted into the channels (17) of the basic body (13).

4. Measuring roller according to one of the claims 1 to 3, **characterised in that** the shape of the lower portion (17a) of the channels (17) of the basic body (13) is adapted to the shape of the sensors (19).

5. Measuring roller according to one of the claims 1 to 4, **characterised in that** the shape of the upper portion (17b) of the channels (17) of the basic body (13) is configured as a function of the transmission function of the jacket tube (14), the transmission function of the jacket tube of the measuring roller being determined by calibration with a normal force and being taken into account by a calibration factor with respect to the received sensor signal.

6. Measuring roller according to one of the claims 1 to 5, **characterised by** recesses (24) which are incorporated into the base (23) of the channels (17) of the basic body (13) for locking the individual sensors (19) or the sensor units (21).

7. Measuring roller according to one of the claims 1 to 6, **characterised in that** the basic body (13) of the measuring roller (9) is provided with at least one clearance cut groove (25) for removal of the jacket tube (14).

8. Measuring roller according to one of the claims 1 to 7, **characterised in that** the jacket tube (14) of the measuring roller (9) has an abrasion-reducing coating (26).

9. Measuring roller according to one of the claims 1 to 8, **characterised in that** the channels (17) in the basic body (13) of the measuring roller (9) are configured as cooling channels for receiving a coolant.

10. Measuring roller according to one of the claims 1 to 9, **characterised in that** the measuring roller (9) is equipped with a device for measuring the load-dependent deformation thereof.

## Revendications

1. Rouleau de mesure de la tension et/ou de la température d'un feuillard sur la largeur du feuillard pour une régulation de la planéité du feuillard lors du laminage de feuillard, comprenant une pièce de base, un tube enveloppe rétreint sur la pièce de base, ainsi que des capteurs intégrés dans des évidements de la pièce de base du rouleau de mesure entraîné en rotation pour mesurer les composantes de force radiales agissant sur le tube enveloppe des tractions du feuillard et/ou la température du feuillard laminé ou du tube enveloppe, **caractérisé en ce que,** dans l'enveloppe (15) extérieure de la pièce (13) de base du rouleau (9) de mesure, sont usinés des canaux (17) qui s'étendent parallèlement à l'axe (16-16) du rouleau, qui s'étendent sur toute la longueur (18) du rouleau ou qui sont interrompus, le tube (14) enveloppe est rétreint sur la pièce (13) de base fini d'usinage et **en ce que**, par les deux côtés (9a, 9b) frontaux du rouleau (9) de mesure, des capteurs (19) sont insérés dans les canaux (17) de la pièce (13) de base entourée par le tube (14) enveloppe.

2. Rouleau de mesure suivant la revendication 1, **caractérisé par** des capteurs (19) insérés individuellement dans les canaux (17) de la pièce (13) de base.

3. Rouleau de mesure suivant la revendication 1, **caractérisé par** des unités (21) de capteur insérées dans les canaux (17) de la pièce (13) de base.

4. Rouleau de mesure suivant la revendication 1 à 3, **caractérisé en ce que** la forme de la partie (17a) inférieure des canaux (17) de la pièce (13) de base est adaptée à la forme des capteurs (19).

5. Rouleau de mesure suivant la revendication 1 à 4, **caractérisé en ce que** la forme de la partie (17b) supérieure des canaux (17) de la pièce (13) de base est conformée en fonction de la fonction de transfert du tube (14) enveloppe, la fonction de transfert du tube enveloppe du rouleau de mesure étant déterminée par étalonnage avec une force normale et étant prise en compte sur le signal le capteur obtenu par un facteur d'étalonnage.

6. Rouleau de mesure suivant l'une des revendications 1 à 5, **caractérisé par** des cavités (24) usinées dans le fond (23) des canaux (17) de la pièce (13) de base pour bloquer les capteurs (19) individuels ou les unités (21) de capteur.

7. Rouleau de mesure suivant l'une des revendications 1 à 6, **caractérisé en ce que** la pièce (13) de base du rouleau (9) de mesure est munie au moins d'une rainure (25) à horduif pour l'enlèvement du tube (14) enveloppe.

8. Rouleau de mesure suivant l'une des revendications 1 à 7, **caractérisé en ce que** le tube (14) enveloppe du rouleau (9) de mesure a un revêtement (26) diminuant l'usure.

9. Rouleau de mesure suivant l'une des revendications 1 à 8, **caractérisé en ce que** les canaux (17) sont formés dans la pièce (13) de base du rouleau (9) de mesure sous la forme de canaux de refroidissement de réception d'un fluide de refroidissement.

10. Rouleau de mesure suivant l'une des revendications 1 à 9, **caractérisé en ce que** le rouleau (9) de mesure est équipé d'un dispositif de mesure de sa déformation en fonction de la charge.
